# EUROPÄISCHE PATENTANMELDUNG

(11) **EP 1 286 178 A2**
(43) Veröffentlichungstag der Anmeldung: **26.02.2003**
(21) Anmeldenummer: 02016031.3
(22) Anmeldetag: 18.07.2002
(51) Int. Cl.: G01S 7/497, G01S 17/93

(54) **Verfahren zur optischen Bodenerkennung**

(30) Priorität: 23.08.2001 DE 10141294
(71) Anmelder: IBEO Automobile Sensor GmbH, 22179 Hamburg (DE)
(72) Erfinder: Willhoeft, Volker, 22303 Hamburg (DE); Lages, Ulrich, Dr., 21031 Hamburg (DE)
(74) Vertreter: Manitz, Finsterwald & Partner GbR

(57) **Zusammenfassung**

Die Erfindung betrifft ein Verfahren zur Bodenerkennung mittels wenigstens einer an einem Fahrzeug angebrachten optoelektronischen Erfassungseinrichtung, insbesondere wenigstens eines Laserscanners (13), mit der in einen Überwachungsbereich insbesondere gepulste elektromagnetische Strahlung ausgesandt und aus dem Überwachungsbereich reflektierte Strahlung empfangen und ausgewertet wird, wobei
- die Strahlung in wenigstens zwei verschiedenen Abtastebenen (15) ausgesandt, und
- die in zumindest einer der Abtastebenen (15) reflektierte Strahlung bei der Auswertung auf das Vorhandensein zumindest eines vorgegebenen charakteristischen Bodenmerkmals hin untersucht wird.

## Beschreibung

Die Erfindung betrifft ein Verfahren zur Bodenerkennung mittels wenigstens einer an einem Fahrzeug angebrachten optoelektronischen Erfassungseinrichtung.

Optoelektronische Erfassungseinrichtungen wie beispielsweise Videokameras und Laserscanner werden in Verbindung mit Fahrzeugen dazu verwendet, die Umgebung des Fahrzeuges zu überwachen und im Überwachungsbereich befindliche Objekte zu erkennen und gegebenenfalls zu verfolgen. Hierzu ist es erforderlich, den Boden als solchen zu erkennen und von "echten" Objekten wie insbesondere anderen Verkehrsteilnehmern unterscheiden zu können, um beispielsweise unnötige Bremsvorgänge zu vermeiden, die versehentlich ausgelöst werden können, wenn eine beispielsweise in horizontaler Richtung "blickende" Erfassungseinrichtung aufgrund einer Nickbewegung des Fahrzeuges vorübergehend auf die Fahrbahn gerichtet ist und diese irrtümlich als ein vermeintlicher, in Fahrtrichtung vor dem Fahrzeug befindlicher Gegenstand detektiert wird.

Aufgabe der Erfindung ist es, ein Bodenerkennungsverfahren der eingangs genannten Art zu schaffen, mit dem auf möglichst zuverlässige Weise der Boden von anderen Objekten unterschieden werden kann.

Die Lösung dieser Aufgabe erfolgt durch die Merkmale des Anspruchs 1 und insbesondere dadurch, daß mit der optoelektronischen Erfassungseinrichtung in einen Überwachungsbereich insbesondere gepulste elektromagnetische Strahlung ausgesandt und aus dem Überwachungsbereich reflektierte Strahlung empfangen und ausgewertet wird, daß die Strahlung in wenigstens zwei verschiedenen Abtastebenen ausgesandt wird, und daß die in zumindest einer der Abtastebenen reflektierte Strahlung bei der Auswertung auf das Vorhandensein zumindest eines vorgegebenen charakteristischen Bodenmerkmals hin untersucht wird.

Erfindungsgemäß wird die elektromagnetische Strahlung in mehreren Abtastebenen ausgesandt, wobei wenigstens zwei Abtastebenen voneinander verschieden sind. Die Aussendung von Strahlung in wenigstens zwei verschiedenen Abtastebenen eröffnet grundsätzlich die vorteilhafte Möglichkeit einer dreidimensionalen oder quasi-dreidimensionalen Abtastung, da in jeder Entfernung innerhalb der Reichweite der verschiedenen Abtastebenen unterschiedliche Höhenniveaus abgetastet werden. Die Verwendung verschiedener Abtastebenen minimiert außerdem die Zeit, in der das Fahrzeug aufgrund eines nicht dem Normalbetrieb entsprechenden Momentanverhaltens - z. B. aufgrund von Nick- oder Wankbewegungen - "blind" ist, da zumindest eine Abtastebene auch dann noch brauchbare Informationen liefert, wenn eine oder mehrere Abtastebenen z. B. aufgrund einer Bodenwelle "in den Himmel blicken".

Erfindungsgemäß ist ferner vorgesehen, daß wenigstens ein charakteristisches Bodenmerkmal vorgegeben wird, das bei der Auswertung der aus dem Überwachungsbereich reflektierten Strahlung herangezogen wird. Dabei wird die in zumindest einer der Abtastebenen reflektierte Strahlung daraufhin untersucht, ob die in der reflektierten Strahlung enthaltenen Informationen auf das Vorhandensein des zumindest einen charakteristischen Bodenmerkmals hindeuten. Wenn bei der Auswertung das Vorhandensein wenigstens eines charakteristischen Bodenmerkmals erkannt wird, dann kann an eine angeschlossene Auswerteeinheit ein entsprechendes Signal gegeben werden, woraufhin beispielsweise mit Hilfe einer zentralen Steuereinrichtung geeignete Maßnahmen ergriffen werden können. Diese Maßnahmen können darin bestehen, die Auswertung der insgesamt aus dem Überwachungsbereich empfangenen Strahlung zu ergänzen und die Erfassung der Szenerie, in der sich das Fahrzeug momentan befindet, auf der Basis der durch die Bodenerkennung gewonnenen Informationen zu verbessern. Es ist ferner möglich, aktiv in den Fahrbetrieb des Fahrzeugs oder in den Betrieb einzelner Fahrzeugeinrichtungen einzugreifen.

Erfindungsgemäß wird somit unter Verwendung wenigsten zweier verschiedener Abtastebenen, die mittels einer oder mehrerer optoelektronischer Erfassungseinrichtungen erzeugt werden, von charakteristischen Eigenschaften Gebrauch gemacht, die das Objekt "Boden" von "echten" Objekten, wie beispielsweise anderen Verkehrsteilnehmern, unterscheidet.

Vorzugsweise handelt es sich bei der optoelektronischen Erfassungseinrichtung um einen Laserscanner, der zur Aussendung von Strahlung in wenigstens einer Abtastebene ausgebildet ist und für jeden innerhalb der Abtastebene ausgesandten Abtaststrahl nach dem Prinzip der Lichtlaufzeitmessung einen Entfernungswert und für diesen Entfernungswert einen Winkelwert bezogen auf eine vorgegebene Achse liefert. Der Winkelbereich, über den die Abtastung erfolgt, kann grundsätzlich beliebig gewählt werden und insbesondere bis zu 360° betragen. Bei der Verwendung von Laserscannern, die zur Aussendung lediglich einer einzigen Abtastebene ausgelegt sind, können wenigstens zwei derartige Laserscanner derart am Fahrzeug angebracht werden, daß deren Abtastebenen gegeneinander verkippt sind.

In einer bevorzugten Ausführungsform der Erfindung wird wenigstens eine optoelektronische Erfassungseinrichtung, insbesondere wenigstens ein Laserscanner verwendet, die bzw. der zur Aussendung von Strahlung in mehreren verschiedenen Abtastebenen ausgebildet ist. Eine einzige derartige, zur Aussendung mehrerer verschiedener Abtastebenen fähige Erfassungseinrichtung reicht für das erfindungsgemäße Bodenerkennungsverfahren prinzipiell aus. Bevorzugt weist diese Erfassungseinrichtung lediglich eine einzige Strahlungsquelle insbesondere in Form einer Laserdiode auf.

Gemäß einer weiteren bevorzugten Variante des erfindungsgemäßen Verfahrens ist vorgesehen, daß wenigstens eine optoelektronische Erfassungseinrichtung, insbesondere wenigstens ein Laserscanner, verwendet wird, die bzw. der für in zumindest einer Abtastebene ausgesandte Strahlung wenigstens eine Strahlungsumlenkeinrichtung aufweist, über die wenigstens eine zusätzliche Abtastebene erzeugt wird.

Bei der Strahlungsumlenkeinrichtung kann es sich beispielsweise um einen oder mehrere Planspiegel handeln. Mittels derartiger Umlenkeinrichtungen kann ein Teil einer - auch als Hauptabtastebene - bezeichneten Abtastebene gezielt in bestimmte Richtungen gelenkt werden. Durch entsprechende Ausrichtung der Umlenkeinrichtungen kann dabei grundsätzlich jede beliebige Relativorientierung zwischen den einzelnen Abtastebenen realisiert werden.

Die Verwendung von Strahlungsumlenkeinrichtungen in Verbindung mit optoelektronischen Erfassungseinrichtungen und insbesondere Laserscannern ist in der am 05.06.2001 eingereichten deutschen Patentanmeldung 101 27 204 beschrieben. Auf den Inhalt dieser Anmeldung wird hiermit ausdrücklich Bezug genommen.

Des weiteren wird erfindungsgemäß vorgeschlagen, daß die Abtastung in mehreren verschiedenen Abtastebenen aus unterschiedlichen Richtungen erfolgt. Hierdurch ist es beispielsweise möglich, eine Region von besonderem Interesse, insbesondere den Boden in Fahrtrichtung vor dem Fahrzeug oder seitlich des Fahrzeugs, gleichzeitig aus mehreren Richtungen zu "betrachten".

Ferner ist es erfindungsgemäß möglich, daß wenigstens zwei optoelektronische Erfassungseinrichtungen, insbesondere Laserscanner, verwendet werden, die jeweils zur Aussendung von Strahlung in einer einzigen Abtastebene ausgebildet sind und derart betrieben werden, daß zumindest zwei Abtastebenen voneinander verschieden sind.

Erfindungsgemäß können mehrere charakteristische Bodenmerkmale vorgegeben werden, die - sofern sie einander nicht widersprechen - bei der Auswertung der empfangenen Strahlung gemeinsam berücksichtigt werden können, wodurch eine besonders zuverlässige Bodenerkennung gewährleistet ist.

In einem Ausführungsbeispiel der Erfindung wird vorgeschlagen, daß als Bodenmerkmal wenigstens eine charakteristische Form von Bodenlinien vorgegeben wird, die jeweils aus in einer Abtastebene empfangenen Bodenreflexionen gebildet werden. Typische Bodenlinienformen, die beispielsweise empirisch bestimmt und in einem Speicher einer angeschlossenen Auswerteeinheit abgelegt werden können, werden hierbei zur Bodenerkennung herangezogen. Linien, die bei der Auswertung empfangener Bodenreflexionen erzeugt werden, können im Rahmen eines Auswertealgorithmus daraufhin untersucht werden, wie gut sie mit einer oder mehreren vorgegebenen charakteristischen Bodenlinienformen übereinstimmen.

Des weiteren ist es erfindungsgemäß möglich, daß als Bodenmerkmal die Position zumindest einer eine charakteristische Form aufweisenden, aus in einer Abtastebene empfangenen Bodenreflexionen gebildeten Bodenlinie relativ zur Erfassungseinrichtung vorgegeben wird.

Hierbei wird der Umstand ausgenutzt, daß beispielsweise bei bekannter Anbauposition und Ausrichtung der Erfassungseinrichtung das Objekt "Boden" nur in bestimmten Entfernungen vom Fahrzeug bzw. von der Erfassungseinrichtung detektiert werden kann. Solche bei der Auswertung von Reflexionen gebildete Linien, die dieses Positions- oder Entfernungskriterium nicht erfüllen, kommen dann im Rahmen der Auswertung als "Boden" nicht in Frage. Informationen über das Momentanverhalten des Fahrzeugs, insbesondere bei Brems- oder Beschleunigungsvorgängen, Kurvenfahrten und/oder ungleichmäßigen Gewichtsverteilungen, können im Rahmen dieser Auswertung mit herangezogen werden.

Ferner wird erfindungsgemäß vorgeschlagen, das als Bodenmerkmal wenigstens ein charakteristisches Bodenmuster vorgegeben wird, dessen Bodenlinien aus in mehreren verschiedenen Abtastebenen empfangenen Bodenreflexionen gebildet werden. Hierbei kann das Objekt "Boden" beispielsweise dadurch erkannt werden, daß zwei oder mehrere unter einem bekannten Winkel auseinander laufende Abtastebenen in unterschiedlichen Entfernungen auf dem Boden auftreffen, was bei der Auswertung der empfangenen Reflexionen zu einem charakteristischen Scanbild führt, das sich beispielsweise von demjenigen unterscheidet, das bei Auftreffen der Abtastebenen auf eine senkrecht auf dem Boden stehende Wand oder auf das Heck eines vorausfahrenden LKW detektiert werden würde.

Gemäß einer weiteren Ausführungsform der Erfindung wird als Bodenmerkmal das charakteristische zeitliche Verhalten wenigstens einer insbesondere eine charakteristische Form aufweisenden Bodenlinie bei aufeinanderfolgenden Abtastvorgängen vorgegeben.

Diese Variante nutzt die Erkenntnis aus, daß sich die bei aufeinanderfolgenden Abtastvorgängen in der gleichen Abtastebene gemessenen Entfernungen von Bodenreflexionen z.B. bei Auftreten starker Steigungen bzw. Gefällen oder bei starken Nick- oder Wankbewegungen des Fahrzeuges sehr schnell und insbesondere sprungartig von einem Abtastvorgang zum nächsten ändern. Der Boden "springt" gewissermaßen auf das Fahrzeug zu bzw. vom Fahrzeug weg, was bei "echten" Objekten wie beispielsweise anderen Verkehrsteilnehmern nicht der Fall ist.

Gemäß einer weiteren Ausführungsform der Erfindung wird aus wenigstens einer eine charakteristische Form aufweisenden Bodenlinie auf den Verlauf des Bodens geschlossen. Insbesondere wird bei einer geraden Bodenlinie auf einen ebenen Boden geschlossen. Erfindungsgemäß kann somit nicht nur das Objekt "Boden" als solches erkannt, sondern es können außerdem nähere Informationen über den erkannten Boden gewonnen werden.

Die Erfindung schlägt des weiteren vor, aus wenigstens einer eine charakteristische Form aufweisenden Bodenlinie auf den Winkel zwischen der Abtastebene und dem Boden, insbesondere auf die Größe von Steigungen und Gefällen, zu schließen. Dies erfolgt insbesondere dadurch, daß die Steigung einer bei der Auswertung ermittelten charakteristischen Bodenlinie ausgewertet wird.

Ferner schlägt die Erfindung vor, daß aus wenigstens einer charakteristischen Unregelmäßigkeit oder Sprungstelle innerhalb einer eine charakteristische Form aufweisenden Bodenlinie auf das Vorhandensein einer Bodenunebenheit geschlossen wird. Hierbei wird die Erkenntnis ausgenutzt, daß bei geeigneter Orientierung der jeweiligen Abtastebene Bodenunebenheiten wie beispielsweise eine Bordsteinkante zu einer Unregelmäßigkeit oder Sprungstelle in einer charakteristischen Bodenlinie führen, die bei ebenem Boden einen stetigen Verlauf aufweisen würde. Die Unregelmäßigkeit oder Sprungstelle kann bei entsprechender Orientierung der Abtastebene insbesondere einen Z-förmigen Verlauf aufweisen.

Durch eine geeignete Transformation oder Projektion von die Bodenreflexionen repräsentierenden Meßwerten im Rahmen der Auswertung kann gemäß einer weiteren Ausführungsform der Erfindung durch Auswerten des Verlauf der Unregelmäßigkeit oder Sprungstelle das Profil der Bodenunebenheit bestimmt oder auf die Höhe oder Tiefe der Bodenunebenheit geschlossen werden. Hierdurch kann beispielsweise nicht nur das Vorhandensein einer Bordsteinkante an sich ermittelt, sondern außerdem deren Höhe gemessen werden.

Die Erkennung von Bordsteinkanten oder anderen die Fahrbahn begrenzenden bzw. den Fahrbahnverlauf wiedergebenden Objekten mittels des erfindungsgemäßen Bodenerkennungsverfahrens kann in vorteilhafter Weise im Rahmen eines Algorithmus zur Erkennung des Fahrbahnverlaufs eingesetzt werden.

In einer weiteren bevorzugten praktischen Ausgestaltung der Erfindung werden eine charakteristische Form aufweisende Bodenlinien jeweils durch wenigstens eine Strahlungsumlenkeinrichtung erzeugt. Vorzugsweise werden wenigstens zwei Abtastebenen erzeugt, die derart unterschiedlich zur Fahrtrichtung orientiert sind, daß zwei unterschiedlich orientierte und bevorzugt einander kreuzende Bodenlinien erzeugt werden. Die Abtastebenen sind vorzugsweise symmetrisch zur Fahrtrichtung des Fahrzeugs orientiert.

Auf diese Weise wird ein besonders charakteristisches und daher im Rahmen der Auswertung vergleichsweise leicht erkennbares Bodenmuster erzeugt, aus dem durch Auswerten des Verlaufs der Bodenlinien nähere Informationen über den Boden gewonnen werden können.

Gemäß einer weiteren bevorzugten Ausführungsform der Erfindung wird vorgeschlagen, daß als Bodenmerkmal der erstmalige Empfang solcher Reflexionen in zumindest einer Abtastebene vorgegeben wird, die nicht von einem Objekt stammen können, das zuvor mit dieser und/oder zumindest einer anderen Abtastebene als nicht Boden bildendes Objekt erkannt worden wäre.

Hierbei wird die Erkenntnis genutzt, daß - zumindest bei normalem Fahrbetrieb - "echte" Objekte wie z. B. andere Verkehrsteilnehmer "nicht vom Himmel fallen", sondern zuvor mittels zumindest einer Abtastebene derart rechtzeitig erkannt werden, daß erstmalig empfangene Reflexionen, die keinem der zuvor erkannten "echten" Objekte zugeordnet werden können, zumindest mit einer gewissen Wahrscheinlichkeit als vom Boden stammend angesehen werden müssen.

Das insbesondere bei starken Steigungen oder bei vergleichsweise starken Nick- oder Wankbewegungen typische plötzliche Auftauchen des Objekts "Boden" kann bei entsprechender Vorgabe dieses charakteristischen Bodenmerkmals erfindungsgemäß folglich erkannt werden. Informationen über das Momentanverhalten des Fahrzeuges können zur Stützung dieser im Rahmen der Auswertung getroffenen Entscheidung herangezogen werden.

Des weiteren schlägt die Erfindung vor, als Bodenmerkmal die charakteristische Form und/oder Breite solcher Bodenreflexionspulse vorzugeben, die bei einem von 90° verschiedenen Winkel zwischen der Abtastebene und dem Boden empfangen werden.

Diese Variante nutzt die Erkenntnis, daß die von einer geneigten Fläche wie beispielsweise einer in Fahrtrichtung vor dem Fahrzeug liegenden, ansteigenden Fahrbahn reflektierten Strahlungspulse eine andere Form und/oder Breite aufweisen als solche Reflexionspulse, die von einer senkrecht auf dem Boden stehenden Wand, z. B. dem Heck eines LKW, stammen.

Die Erfindung schlägt des weiteren vor, daß aus der charakteristischen Form und/oder Breite der Bodenreflexionspulse der Winkel zwischen der Abtastebene und dem Boden bestimmt wird. Hierdurch läßt sich beispielsweise die Größe von Steigungen und Gefällen berechnen.

In einer weiteren bevorzugten Ausführungsform der Erfindung ist zumindest eine optoelektronische Erfassungseinrichtung, insbesondere wenigstens ein Laserscanner, vorgesehen, mit dem die Strahlung nach Art eines Fächers gleichzeitig in mehreren Abtastebenen ausgesandt wird.

Besonders bevorzugt ist es, wenn gemäß einer weiteren Variante der Erfindung wenigstens eine Boden-Abtastebene vorgesehen wird, die gezielt auf den Boden in einer Entfernung von der Erfassungseinrichtung gerichtet ist, aus der bei normalem Fahrbetrieb Bodenreflexionen erwartet werden.

Hierbei wird nicht nur die in zumindest einer der Abtastebenen reflektierte Strahlung daraufhin untersucht, ob zumindest ein vorgegebenes charakteristisches Bodenmerkmal vorhanden ist, sondern es wird gezielt wenigstens eine Boden-Abtastebene "spendiert", die ausschließlich für die Bodenerkennung vorgesehen ist, d. h. eine der Abtastebenen wird für die Bodenerkennung "abgestellt".

Dabei ist bevorzugt vorgesehen, daß die Ausrichtung der Erfassungseinrichtung automatisch derart verändert wird, daß die mit der Boden-Abtastebene gemessene Entfernung zumindest bei einem als normal eingestuften Fahrbetrieb konstant ist.

Hierbei dient die Boden-Abtastebene gewissermaßen als ein "Stützfuß" für die Erfassungseinrichtung, der eine gleichbleibende Orientierung der übrigen Abtastebenen insbesondere auch dann sicherstellt, wenn das Fahrzeug Nick- oder Wankbewegungen ausführt oder im Begriff ist, eine Steigung oder ein Gefälle zu befahren. Die Verwendung einer gezielt zur Bodenerkennung dienenden Boden-Abtastebene eignet sich insbesondere für die Realisierung einer automatischen oder dynamischen Nick- und Wankwinkelkompensation.

Besonders bevorzugt ist es, wenn gemäß einer Variante der Erfindung die Ausrichtung der Erfassungseinrichtung durch Nachführen einer Fahrzeugeinrichtung verändert wird, an der die Erfassungseinrichtung angebracht ist.

Hierbei kann die Erfassungseinrichtung folglich dafür eingesetzt werden, eine gleichbleibende Orientierung der betreffenden Fahrzeugeinrichtung relativ zum Boden zu gewährleisten, und zwar unabhängig von der Lage des Fahrzeuges relativ zum Boden. Von besonderem Vorteil ist diese Variante der Erfindung dann, wenn es sich bei der Fahrzeugeinrichtung um einen Fahrzeugscheinwerfer handelt. Eine grundsätzlich in jeder beliebigen Fahrsituation gleichbleibende Ausrichtung der Fahrzeugscheinwerfer relativ zum Boden kann auf diese Weise durch die Erfindung sichergestellt werden.

Die Erfindung schlägt des weiteren vor, für die Auswertung der empfangenen Strahlung solche Zusatzinformationen über das Momentanverhalten des Fahrzeuges, insbesondere bei Brems- oder Beschleunigungsvorgängen, Kurvenfahrten und/oder ungleichmäßigen Gewichtsverteilungen, heranzuziehen, die zu einer Abweichung der normalen Ausrichtung des Fahrzeuges auf dem Boden führen.

Die Erfindung betrifft außerdem die Verwendung einer oder mehrerer optoelektronischer Erfassungseinrichtungen, insbesondere eines oder mehrere Laserscanner, mit denen insbesondere gepulste elektromagnetische Strahlung in wenigstens zwei verschiedenen Abtastebenen ausgesandt und aus einem Überwachungsbereich reflektierte Strahlung empfangen und ausgewertet wird, in Verbindung mit einem Fahrzeug zur Bodenerkennung gemäß einem Verfahren, wie es vorstehend dargelegt ist.

Weitere bevorzugte Ausführungsformen der Erfindung sind auch in den Unteransprüchen, der Beschreibung sowie der Zeichnung angegeben.

Die Erfindung wird im folgenden beispielhaft unter Bezugnahme auf die Zeichnung beschrieben. Es zeigen:
- Fig. 1, 2 und 3: jeweils schematisch einen verschiedene Abtastebenen aufweisenden Laserscanner, und zwar jeweils in einer Draufsicht und einer Seitenansicht,
- Fig. 4, 5, 6, 7a und 7b: verschiedene Beispiele für aus empfangenen Bodenreflexionen gebildete Bodenlinien, und
- Fig. 8a und 8b: ein erfindungsgemäßes Prinzip zur Bodenerkennung durch Auswerten von Reflexionspulsen.

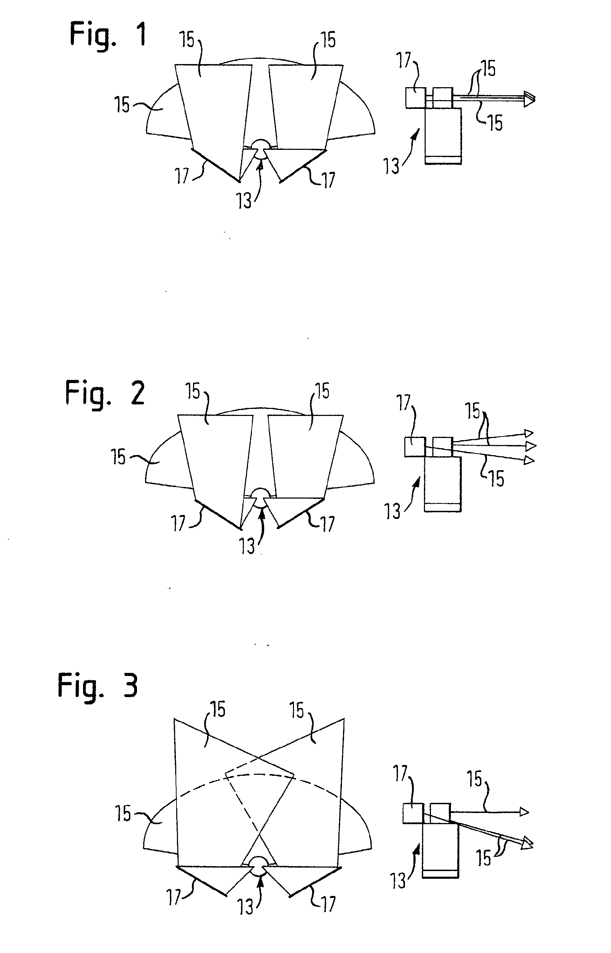

Die Fig. 1, 2 und 3 zeigen jeweils eine Ausführungsform eines Laserscanners 13, der mit zwei Planspiegeln 17 versehen ist, welche im am Fahrzeug montierten Zustand vorzugsweise bezüglich der Fahrtrichtung symmetrisch angeordnet sind.

Die vom Scanner 13 ausgesandte Strahlung wird zum einen über einen Winkelbereich von nahezu 180° direkt in einer Hauptabtastebene 15 und über die Spiegel 17 in zwei weiteren, jeweils einen Winkelbereich von etwa 40° abdeckenden Abtastebenen 15 ausgesandt, so daß insgesamt mit drei verschiedenen Abtastebenen 15 gearbeitet wird.

In dem Beispiel gemäß Fig. 1 liegen alle drei Abtastebenen 15 in einer gemeinsamen Ebene, wodurch die effektive Abtastfrequenz erhöht wird, da für jede Umdrehung des Scanners 13 die im Überlappungsbereich der Abtastebenen 15 liegenden Regionen mehrfach abgetastet werden.

Ein mehrere Abtastebenen aussendender Scanner 13 wird auch als Mehrzeilen-Scanner bezeichnet, da ein von den Abtastebenen 15 erfaßtes Objekt zeilenförmig abgetastet wird.

In dem in Fig. 2 gezeigten Beispiel sind die beiden Spiegel 17 geringfügig, z. B. um einige wenige Grad, gegeneinander verkippt, wodurch insgesamt drei unterschiedlich orientierte Abtastebenen 15 erzeugt werden.

In dem Beispiel gemäß Fig. 3 sind die Spiegel 17 derart orientiert, daß die über die Spiegel 17 ausgesandten Abtastebenen einander überlappen und im am Fahrzeug montierten Zustand und bei normal ausgerichtetem Fahrzeug im Nahbereich vor dem Scanner 13 auf den Boden treffen.

Während die vergleichsweise leichte Spiegelverkippung gemäß Fig. 2 insbesondere eine Mehrebenen- oder Mehrzeilenabtastung ermöglicht, die eine Nickwinkelkompensation ohne mechanisch zu bewegende Bauteile dadurch gestattet, daß zumindest bei den meisten in der Praxis auftretenden Nickbewegungen des Fahrzeugs - z. B. aufgrund von Bodenunebenheiten oder Bremsvorgängen - stets zumindest eine der Abtastebenen 15 in eine Richtung "blickt", in der für die Überwachung der Fahrzeugumgebung wichtige Objekte sicher erkannt werden, werden bei dem Beispiel gemäß Fig. 3 die beiden über die Spiegel 17 ausgesandten Abtastebenen 15 gezielt für die Bodenerkennung eingesetzt.

Die erfindungsgemäße Bodenerkennung durch Überprüfen der empfangenen Strahlung auf das Vorhandensein charakteristischer Bodenmerkmale kann jedoch grundsätzlich für jede beliebig orientierte Abtastebene 15 und damit nicht nur für die gezielt zur Bodenerkennung abgestellten Abtastebenen 15 gemäß Fig. 3, sondern auch für alle Abtastebenen 15 von Fig. 1 und Fig. 2 durchgeführt werden.

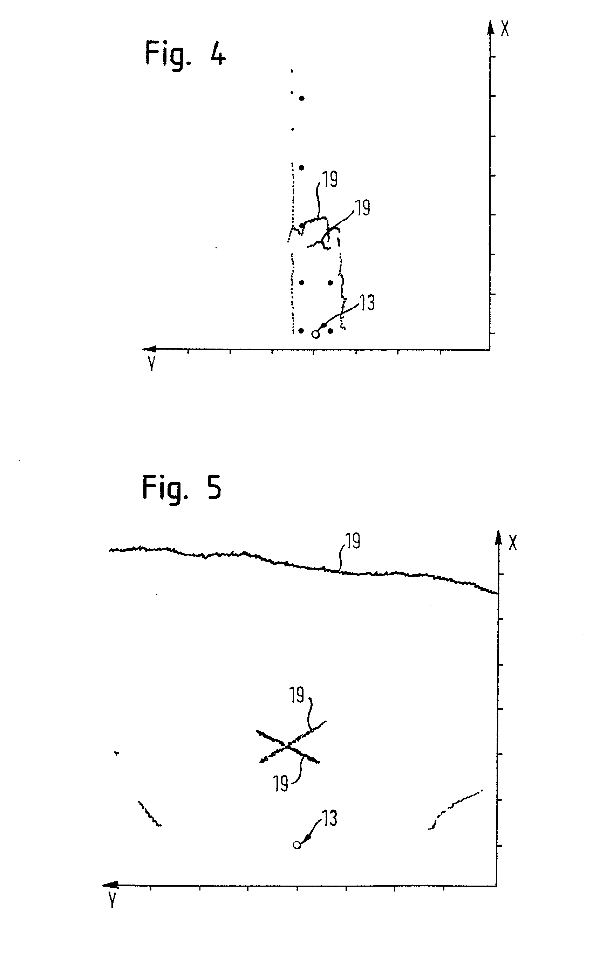

Fig. 4 zeigt ein typisches Scanbild, das mit einem Laserscanner 13 gemessen wurde, wie er in Fig. 2 dargestellt ist, d. h. mit einem Laserscanner, der nur relativ leicht verkippte Spiegel 17 aufweist. Die Laserscanner 13 arbeiten bevorzugt mit einer Wellenlänge von 905 nm (nahes IR), so daß es sich bei den Spiegeln 17 jeweils um Infrarot-Spiegel handelt.

Das Fahrzeug, an welchem der Laserscanner 13 angebracht ist, bewegt sich in x-Richtung auf einer Fahrbahn, die mittels der beiden unteren Abtastebenen 15 (vgl. Fig. 2) dadurch erkannt wird, daß die Bodenreflexionen charakteristische Bodenlinien 19 detektieren. Die mittels der unteren Abtastebene 15 detektierte Bodenlinie 19 trifft auf die Fahrbahn in einer geringeren Entfernung vom Scanner 13 als die mittlere Abtastebene 15, die folglich die gegenüber den Fahrbahnrändern erhöhte Fahrbahn deutlich ausgeprägter zeigt, während die obere (Haupt-)Abtastebene 15 nicht oder erst außerhalb der Reichweite des Scanners 13 auf die Fahrbahn trifft.

Fig. 4 zeigt außerdem eine vergleichsweise "scharfe" linke Fahrbahnbegrenzung, wie sie beispielsweise durch eine Leitplanke hervorgerufen wird, während die rechte Fahrbahnbegrenzung, die in diesem Beispiel über die mittlere Abtastebene 15 ermittelt wurde, von vergleichsweise "unscharfen" Objekten, wie z. B. Gräsern oder Büschen, begrenzt wird. In einer größeren Entfernung als derjenigen, in der die mittlere Abtastebene 15 auf die Fahrbahn trifft, wird mittels der oberen Abtastebene 15 lediglich die vergleichsweise "scharfe" linke Fahrbahnbegrenzung "gesehen". Bei den innerhalb der Fahrbahnbegrenzungen gelegenen, regelmäßig angeordneten Objekten handelt es sich um Leitpfosten.

Zu bemerken ist ferner, daß Fig. 4 - wie auch die im folgenden beschriebenen Fig. 5, 6, 7a und 7b - Rohdaten zeigt, was bedeutet, daß jeder Punkt im Scanbild einem reflektierten Abtaststrahl entspricht.

Fig. 4 macht deutlich, daß erfindungsgemäß eine Bodenerkennung nicht nur über die Detektion charakteristischer Bodenlinien 19 an sich, sondern außerdem dadurch möglich ist, daß das von den Bodenlinien 19 gebildete charakteristische Bodenmuster als solches bei der Auswertung erkannt wird.

Fig. 5 zeigt ein Scanbild, das mit einem Scanner 13 aufgenommen wurde, wie er in Fig. 3 dargestellt ist. Die über die vergleichsweise stark aus der Horizontalen gekippten Spiegel 17 ausgesandten Abtastebenen 15 "blicken" in relativ kurzer Entfernung von z. B. etwa 2 m vor dem am Fahrzeug angebrachten Scanner 13 auf den Boden. Die in diesen Abtastebenen 15 empfangenen Reflexionen bilden ein charakteristisches Bodenmuster in Form zweier einander kreuzender charakteristischer Bodenlinien 19.

Hierdurch ist nicht nur eine Bodenerkennung an sich möglich, sondern aus dem Verlauf der Bodenlinien 19 können zusätzliche Informationen gewonnen werden. So kann aus dem geraden Verlauf einer Bodenlinie 19 auf einen ebenen Boden, aus der Orientierung, d. h. hier dem positiven Gradienten, einer Bodenlinie 19 auf das Vorhandensein einer Fahrbahnsteigung und aus der Steigung der Bodenlinie 19 selbst auf die Größe der Fahrbahnsteigung geschlossen werden.

Die Steigungsberechnung kann mittels der oberen (Haupt-)Abtastebene 15 (vgl. Fig. 3) auf Plausibilität dadurch geprüft werden, daß die tatsächliche Entfernung, in welcher die obere Abtastebene 15 auf die Fahrbahn trifft und die im oberen Teil von Fig. 5 dargestellte, quer zur Fahrtrichtung verlaufende Bodenlinie 19 erzeugt, mit einem Vorhersagewert verglichen wird, der aus den einander kreuzenden Bodenlinien 19 gewonnen wird.

Hierdurch kann mittels der über die Spiegel 17 ausgesandten, gezielt zur Bodenerkennung eingesetzten Abtastebenen 15 festgestellt werden, ob es sich bei einem mit der oberen Abtastebene 15 erkannten Objekt um den Boden oder um ein "echtes" Objekt wie z. B. einen anderen Verkehrsteilnehmer handelt.

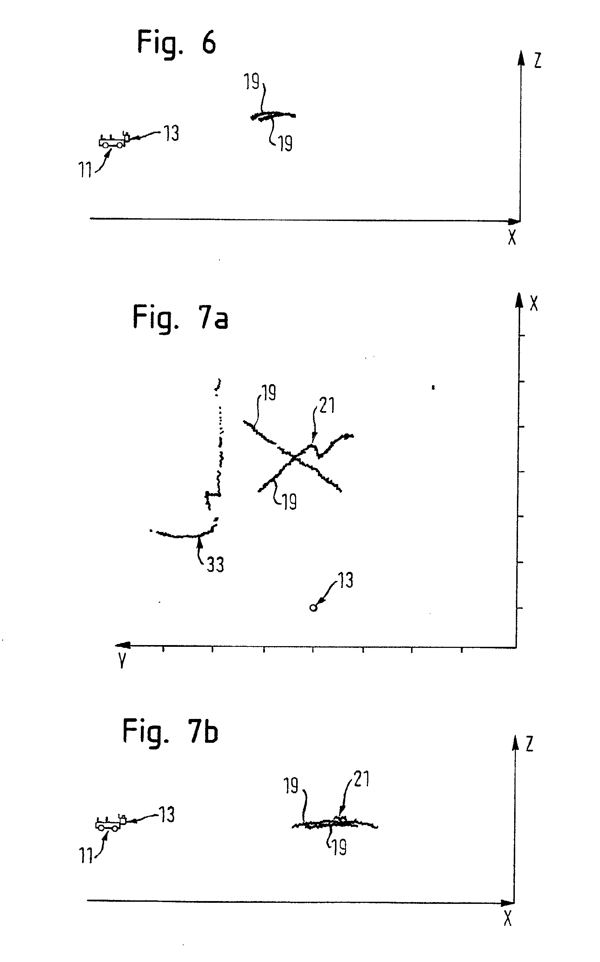

Fig. 6 zeigt eine weitere Möglichkeit zur Bestimmung von Fahrbahnsteigungen oder - gefällen. Es handelt sich bei diesem Scanbild um eine Projektion der Scanpunkte in die x-z-Ebene, d. h. die y-Koordinate wurde außer acht gelassen. Die charakteristischen Bodenlinien 19, die mittels der über die Spiegel 17 ausgesandten Abtastebenen 15 (vgl. Fig. 3) gewonnen werden, geben die Höhe der einzelnen Scanpunkte bezogen auf die Position des Scanners 13 am (nicht maßstabsgerecht dargestellten) Fahrzeug 11 an.

Aus dem Verlauf dieser gewissermaßen eine Seitenansicht bildenden charakteristischen Bodenlinie 19 kann die Größe der Fahrbahnsteigung bzw. des Fahrbahngefälles berechnet werden.

Fig. 7a zeigt ein Scanbild, das wiederum mit einem Laserscanner 13, wie er in Fig. 3 dargestellt ist, aufgenommen wurde und entsprechend Fig. 5 einander kreuzende, charakteristische Bodenlinien 19 zeigt, die von den über die Spiegel 17 ausgesandten Abtastebenen 15 stammen. Mit der oberen, direkt ausgesandten Abtastebene 15 wird ein anderes, links vor dem eigenen Fahrzeug befindliches Fahrzeug 33 "gesehen" und anhand seiner charakteristischen Form erkannt.

Die von links nach rechts ansteigende Bodenlinie 19 weist eine Z-förmige Sprungstelle 21 auf. Derartige Unregelmäßigkeiten in den charakteristischen Bodenlinien 19 entstehen durch Abtasten von Bodenunebenheiten. Im in Fig. 7a dargestellten Fall handelt es sich bei der Bodenunebenheit um eine Bordsteinkante, die sich in der charakteristischen Unregelmäßigkeit oder Sprungstelle 21 widerspiegelt.

Durch die in Fig. 7b gezeigte, der Darstellung in Fig. 6 entsprechenden Projektion kann die Höhe der Bordsteinkante 21 auf einfache Weise bestimmt werden. Hierdurch ermöglicht die Erfindung folglich nicht nur die Bodenerkennung an sich, sondern außerdem die quantitative Bestimmung eines Bodenprofils.

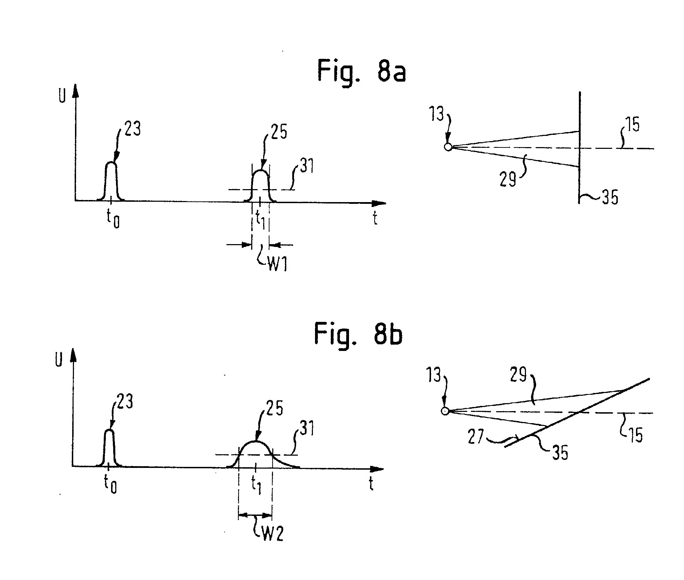

Die Fig. 8a und 8b zeigen eine weitere Möglichkeit, zum einen den Boden als solchen zu erkennen und zum anderen nähere Informationen über den Boden zu gewinnen.

Die linke Darstellung in Fig. 8a und 8b zeigt jeweils einen zu einem Zeitpunkt t0 vom Laserscanner 13 ausgesandten Strahlungspuls 23, der nach Reflexion an einer Fläche 35 zu einem späteren Zeitpunkt t1 als Reflexionspuls 25 empfangen wird.

Die Form des Reflexionspulses 25 und insbesondere dessen bei einer vorgegebenen Schwelle 31 gemessene Breite W ist aufgrund der Aufweitung des Laserstrahls 29 von dem Winkel zwischen der Abtastebene 15, in welcher der Strahl 29 ausgesandt wird, und der jeweiligen reflektierenden Fläche 35 abhängig. Da bei der gegenüber der Abtastebene 15 geneigten Reflexionsfläche 35 gemäß Fig. 8b die Front des aufgeweiteten Strahls 29 zu verschiedenen Zeitpunkten auf die Reflexionsfläche 35 auftrifft, ist die Breite W2 des betreffenden Reflexionspulses 25 größer als die Breite W1 des von der senkrecht zur Abtastebene 15 verlaufenden Reflexionsfläche 35 reflektierten Pulses 25 gemäß Fig. 8a.

Aus dem auf diese Weise erkannten Vorhandensein einer vor dem Fahrzeug befindlichen Schrägfläche kann - gegebenenfalls unter Berücksichtigung von Zusatzinformationen z. B. über das Momentanverhalten des Fahrzeuges oder über andere mittels des Laserscanners 13 erkannte Objekte - auf eine vor dem Fahrzeug liegende Steigung geschlossen und damit das Objekt "Boden" als solches erkannt werden. Ferner kann durch eine Analyse des Reflexionspulses 25 der Winkel zwischen der Abtastebene 15 und dem Boden 27 berechnet und damit die Größe der Steigung bestimmt werden.

Alle in dieser Anmeldung beschriebenen erfindungsgemäßen Möglichkeiten zur Bodenerkennung können - sofern sie einander nicht widersprechen - miteinander kombiniert und gegebenenfalls durch Zusatzinformationen ergänzt werden.

### Bezugszeichenliste

- 11: Fahrzeug
- 13: optoelektronische Erfassungseinrichtung, Laserscanner
- 15: Abtastebene
- 17: Strahlungsumlenkeinrichtung, Spiegel
- 19: charakteristische Bodenlinie
- 21: Unregelmäßigkeit, Sprungstelle
- 23: ausgesandter Strahlungspuls
- 25: Reflexionspuls
- 27: Boden
- 29: Strahl
- 31: Schwelle
- 33: anderes Fahrzeug
- 35: reflektierende Fläche

## Patentansprüche

1. Verfahren zur Bodenerkennung mittels wenigstens einer an einem Fahrzeug (11) angebrachten optoelektronischen Erfassungseinrichtung (13), insbesondere wenigstens eines Laserscanners, mit der in einen Überwachungsbereich insbesondere gepulste elektromagnetische Strahlung ausgesandt und aus dem Überwachungsbereich reflektierte Strahlung empfangen und ausgewertet wird, wobei
- die Strahlung in wenigstens zwei verschiedenen Abtastebenen (15) ausgesandt, und
- die in zumindest einer der Abtastebenen (15) reflektierte Strahlung bei der Auswertung auf das Vorhandensein zumindest eines vorgegebenen charakteristischen Bodenmerkmals hin untersucht wird.

2. Verfahren nach Anspruch 1,
**dadurch gekennzeichnet,**
**daß** wenigstens eine optoelektronische Erfassungseinrichtung (13), insbesondere wenigstens ein Laserscanner, verwendet wird, die zur Aussendung von Strahlung in mehreren verschiedenen Abtastebenen (15) ausgebildet ist und vorzugsweise eine einzige Strahlungsquelle insbesondere in Form einer Laserdiode aufweist.

3. Verfahren nach Anspruch 1 oder 2,
**dadurch gekennzeichnet,**
**daß** wenigstens eine optoelektronische Erfassungseinrichtung (13), insbesondere wenigstens ein Laserscanner, verwendet wird, die für in zumindest einer Abtastebene (15) ausgesandte Strahlung wenigstens eine Strahlungsumlenkeinrichtung (17) aufweist, über die wenigstens eine zusätzliche Abtastebene (15) erzeugt wird.

4. Verfahren nach einem der vorhergehenden Ansprüche,
**dadurch gekennzeichnet,**
**daß** die Abtastung in mehreren verschiedenen Abtastebenen (15) aus unterschiedlichen Richtungen erfolgt.

5. Verfahren nach einem der vorhergehenden Ansprüche,
**dadurch gekennzeichnet,**
**daß** wenigstens zwei optoelektronische Erfassungseinrichtungen, insbesondere Laserscanner, verwendet werden, die jeweils zur Aussendung von Strahlung in einer einzigen Abtastebene ausgebildet sind und derart betrieben werden, daß zumindest zwei Abtastebenen voneinander verschieden sind.

6. Verfahren nach einem der vorhergehenden Ansprüche,
**dadurch gekennzeichnet,**
**daß** als Bodenmerkmal wenigstens eine charakteristische Form von Bodenlinien (19) vorgegeben wird, die jeweils aus in einer Abtastebene (15) empfangenen Bodenreflexionen gebildet werden.

7. Verfahren nach einem der vorhergehenden Ansprüche,
**dadurch gekennzeichnet,**
**daß** als Bodenmerkmal die Position zumindest einer eine charakteristische Form aufweisenden, aus in einer Abtastebene (15) empfangenen Bodenreflexionen gebildeten Bodenlinie (19) relativ zur Erfassungseinrichtung (13) vorgegeben wird.

8. Verfahren nach einem der vorhergehenden Ansprüche,
**dadurch gekennzeichnet,**
**daß** als Bodenmerkmal wenigstens ein charakteristisches, insbesondere von mehreren jeweils eine charakteristische Form aufweisenden Bodenlinien (19) gebildetes Bodenmuster vorgegeben wird, dessen Bodenlinien (19) aus in mehreren verschiedenen Abtastebenen (15) empfangenen Bodenreflexionen gebildet werden.

9. Verfahren nach einem der vorhergehenden Ansprüche,
**dadurch gekennzeichnet,**
**daß** als Bodenmerkmal das charakteristische zeitliche Verhalten wenigstens einer insbesondere eine charakteristische Form aufweisenden Bodenlinie (19) bei aufeinanderfolgenden Abtastvorgängen vorgegeben wird.

10. Verfahren nach einem der Ansprüche 6 bis 9,
**dadurch gekennzeichnet,**
**daß** aus wenigstens einer eine charakteristische Form aufweisenden Bodenlinie (19) auf den Verlauf des Bodens geschlossen wird, wobei insbesondere bei einer geraden Bodenlinie (19) auf einen ebenen Boden geschlossen wird.

11. Verfahren nach einem der Ansprüche 6 bis 10,
**dadurch gekennzeichnet,**
**daß** aus wenigstens einer eine charakteristische Form aufweisenden Bodenlinie (19) auf den Winkel zwischen der Abtastebene (15) und dem Boden, insbesondere auf die Größe von Steigungen und Gefällen, geschlossen wird.

12. Verfahren nach einem der Ansprüche 6 bis 11,
**dadurch gekennzeichnet,**
**daß** aus wenigstens einer charakteristischen, insbesondere Z-förmigen Unregelmäßigkeit oder Sprungstelle (21) innerhalb einer eine charakteristische Form aufweisenden Bodenlinie (19) auf das Vorhandensein einer Bodenunebenheit, insbesondere einer Bordsteinkante, geschlossen wird.

13. Verfahren nach Anspruch 12,
**dadurch gekennzeichnet,**
**daß** durch Auswerten des Verlaufs der Unregelmäßigkeit oder Sprungstelle (21), insbesondere mittels einer Projektion von die Bodenreflexionen repräsentierenden Meßwerten, das Profil der Bodenunebenheiten bestimmt und insbesondere auf die Höhe oder Tiefe der Bodenunebenheit geschlossen wird.

14. Verfahren nach einem der Ansprüche 6 bis 13,
**dadurch gekennzeichnet,**
**daß** eine charakteristische Form aufweisende Bodenlinien (19) jeweils durch wenigstens eine Strahlungsumlenkeinrichtung (17) erzeugt werden, wobei bevorzugt wenigstens zwei Abtastebenen (15) erzeugt werden, die derart unterschiedlich und bevorzugt symmetrisch zur Fahrtrichtung orientiert sind, daß zwei unterschiedlich orientierte und bevorzugt einander kreuzende Bodenlinien (19) erzeugt werden.

15. Verfahren nach einem der vorhergehenden Ansprüche,
**dadurch gekennzeichnet,**
**daß** als Bodenmerkmal der erstmalige Empfang solcher Reflexionen in zumindest einer Abtastebene (15) vorgegeben wird, die nicht von einem Objekt stammen können, das zuvor mit dieser und/oder zumindest einer anderen Abtastebene (15) als nicht Boden bildendes Objekt erkannt worden wäre.

16. Verfahren nach einem der vorhergehenden Ansprüche,
**dadurch gekennzeichnet,**
**daß** als Bodenmerkmal die insbesondere bezüglich der in wenigstens einer Abtastebene (15) ausgesandten Strahlungspulse (23) charakteristische Form und/oder Breite (W2) solcher Bodenreflexionspulse (25) vorgegeben wird, die bei einem von 90° verschiedenen Winkel zwischen der Abtastebene (15) und dem Boden (27) empfangen werden.

17. Verfahren nach Anspruch 16,
**dadurch gekennzeichnet,**
**daß** aus der charakteristischen Form und/oder Breite (W2) der Bodenreflexionspulse (25) der Winkel zwischen der Abtastebene (15) und dem Boden (27), insbesondere die Größe von Steigungen und Gefällen, bestimmt wird.

18. Verfahren nach einem der vorhergehenden Ansprüche,
**dadurch gekennzeichnet,**
**daß** die Strahlung nach Art eines Fächers gleichzeitig in mehreren Abtastebenen (15) ausgesandt wird.

19. Verfahren nach einem der vorhergehenden Ansprüche,
**dadurch gekennzeichnet,**
**daß** wenigstens eine Boden-Abtastebene (15) vorgesehen wird, die gezielt auf den Boden in einer Entfernung von der Erfassungseinrichtung (13) gerichtet ist, aus der bei normalem Fahrbetrieb Bodenreflexionen erwartet werden.

20. Verfahren nach Anspruch 19,
**dadurch gekennzeichnet,**
**daß** insbesondere zur Nick- oder Wankwinkelkompensation die Ausrichtung der Erfassungseinrichtung (13) automatisch derart verändert wird, daß die mit der Boden-Abtastebene (15) gemessene Entfernung zumindest bei einem als normal eingestuften Fahrbetrieb konstant ist.

21. Verfahren nach Anspruch 20,
**dadurch gekennzeichnet,**
**daß** die Ausrichtung der Erfassungseinrichtung (13) durch Nachführen einer Fahrzeugeinrichtung, insbesondere eines Fahrzeugscheinwerfers, verändert wird, an der die Erfassungseinrichtung (13) angebracht ist.

22. Verfahren nach einem der vorhergehenden Ansprüche,
**dadurch gekennzeichnet,**
**daß** für die Auswertung der empfangenen Strahlung solche Zusatzinformationen über das Momentanverhalten des Fahrzeugs (11), insbesondere bei Brems- oder Beschleunigungsvorgängen, Kurvenfahrten und/oder ungleichmäßigen Gewichtsverteilungen, herangezogen werden, die zu einer Abweichung der normalen Ausrichtung des Fahrzeugs (11) auf dem Boden führen.

23. Verwendung einer oder mehrerer optoelektronischer Erfassungseinrichtungen (11), insbesondere eines oder mehrerer Laserscanner, mit denen
- insbesondere gepulste elektromagnetische Strahlung in wenigstens zwei verschiedenen Abtastebenen (15) ausgesandt und
- aus einem Überwachungsbereich reflektierte Strahlung empfangen und ausgewertet wird,
in Verbindung mit einem Fahrzeug (11) zur Bodenerkennung gemäß einem Verfahren nach einem der vorhergehenden Ansprüche.
